# EUROPÄISCHE PATENTSCHRIFT

(11) **EP 3 406 952 B1**
(45) Veröffentlichungstag und Bekanntmachung des Hinweises auf die Patenterteilung: **06.11.2019**
(21) Anmeldenummer: 17172113.7
(22) Anmeldetag: 22.05.2017
(51) Int. Cl.: F16L 3/10, F16L 3/24

(54) **SCHWENKBARER KABELHALTER**
PIVOTABLE CABLE HOLDER
SUPPORT DE CÂBLE PIVOTANT

(43) Veröffentlichungstag der Anmeldung: 28.11.2018
(73) Patentinhaber: HILTI Aktiengesellschaft, 9494 Schaan (LI)
(72) Erfinder: Hermann, Fritz, 9494 Schaan (LI)
(74) Vertreter: Hilti Aktiengesellschaft Corporate Intellectual Property

(56) Entgegenhaltungen:
- DE-B3-102011 116 948
- US-A1- 2008 308 686

## Beschreibung

Die Erfindung betrifft eine Vorrichtung zum Befestigen eines Kabels an einer Montageschiene mit einer Kabelklemme für das Kabel, einem Zwischenstück, einem ersten Kabelklemmenbolzen und einem zweiten Kabelklemmenbolzen, mit denen die Kabelklemme am Zwischenstück festgelegt ist, und einem ersten Schienenbolzen, mit dem das Zwischenstück an der Montageschiene festlegbar ist.

Eine gattungsgemässe Vorrichtung ist aus der EP 1624239 A1 bekannt.

Kabel, insbesondere Hochvoltkabel, werden über Kabelklemmen mit der Unterkonstruktion verbunden. Vielfach erfolgt das auf Konsolen geradlinig entlang einer Tunnelwand.

Bei Änderungen im Kabelverlauf, wie sie beispielsweise in Kurven, bei Höhenänderungen des Tunnels oder an der Ableitung des Kabels auftreten können, ist die Unterkonstruktion dem Verlauf des häufig relativ starren Kabels anzupassen. Hierfür werden Justierelemente benötigt.

Die DE102011116948 B3 zeigt eine Bandschelle mit einem flachen Spannband und mit einem Halteteil, das zur Festlegung des Spannbandes eine Abstützfläche für dieses sowie einen Verankerungsbereich für die Anbringung an einer Tragstruktur aufweist, wobei das Halteteil ein die Abstützfläche für das Spannband aufweisendes Konsolenoberteil und ein den Verankerungsbereich bildendes Konsolenunterteil aufweist, wobei Oberteil und Unterteil zueinander schwenkbeweglich gekoppelt sind.

Aufgabe der Erfindung ist es, eine konstruktiv besonders einfache und zuverlässige Vorrichtung anzugeben, welche eine besonders anwenderfreundliche Justierung des Kabels, vorzugsweise in mehreren Richtungen und/oder um mehrere Achsen, ermöglicht.

Die Aufgabe wird erfindungsgemäss durch eine Vorrichtung mit den Merkmalen des Anspruchs 1 gelöst. Bevorzugte Ausführungsformen sind in den abhängigen Ansprüchen angegeben.

Eine erfindungsgemässe Vorrichtung ist dadurch gekennzeichnet, dass das Zwischenstück ein Schienenteil und ein Kabelklemmenteil aufweist, welches um eine Schwenkachse schwenkbar am Schienenteil gelagert ist, dass die Kabelklemme mittels des ersten Kabelklemmenbolzens und des zweiten Kabelklemmenbolzens am Kabelklemmenteil des Zwischenstücks festgelegt ist, dass, mittels des ersten Schienenbolzens, das Zwischenstück an seinem Schienenteil an der Montageschiene festlegbar ist, dass das Kabelklemmenteil ein erstes Langloch und ein zweites Langloch aufweist, wobei der erste Kabelklemmenbolzen im ersten Langloch und der zweite Kabelklemmenbolzen im zweiten Langloch angeordnet ist, und dass das erste Langloch des Kabelklemmenteils ein gerades Langloch und das zweite Langloch des Kabelklemmenteils ein gekrümmtes Langloch ist.

Ein erster Grundgedanke der Erfindung kann darin gesehen werden, das Zwischenstück mehrteilig mit zwei gegeneinander um eine erste Schwenkachse schwenkbaren Teilen, nämlich dem Kabelklemmenteil und dem Schienenteil, auszuführen. Dabei ist die Kabelklemme mittels der Kabelklemmenbolzen am Kabelklemmenteil und das Schienenteil mittels des zumindest einen Schienenbolzens an der Montageschiene festgelegt, so dass aus der Schwenkbarkeit des Kabelklemmenteils relativ zum Schienenteil um die Schwenkachse eine Schwenkbarkeit der Kabelklemme relativ zur Montageschiene um die Schwenkachse resultiert. Durch Verwendung eines schwenkbaren Zwischenstücks ist eine Justierung um die, insbesondere horizontal verlaufende, Schwenkachse in konstruktiv besonders einfacher, zuverlässiger und anwenderfreundlicher Art und Weise möglich. Die Schwenkachse ist vorteilhafterweise aussermittig am Zwischenstück angeordnet, was einen besonders grossen Schwenkwinkel, vorzugsweise von 90° ermöglichen kann.

Insbesondere durchlaufen der erste Kabelklemmenbolzen und der zweite Kabelklemmenbolzen das Kabelklemmenteil und der erste Schienenbolzen und ein gegebenenfalls vorhandener zweiter Schienenbolzen das Schienenteil.

Zweckmässigerweise verläuft die Schwenkachse winklig, insbesondere rechtwinklig, zu zumindest einem der Bolzen, vorzugsweise zu allen besagten Bolzen, also zum ersten Kabelklemmenbolzen, zum zweiten Kabelklemmenbolzen, zum ersten Schienenbolzen und/oder zum gegebenenfalls vorhandenen zweiten Schienenbolzen. Dies kann die Anwendbarkeit weiter verbessern.

Besonders bevorzugt ist es, dass das Kabelklemmenteil eine vorzugsweise ebene Grundplatte und zwei, vorzugsweise rechtwinklig, abgewinkelte Flansche aufweist. Weiterhin ist es bevorzugt, dass das Schienenteil eine vorzugsweise ebene Grundplatte und zwei, vorzugsweise rechtwinklig, abgewinkelte Flansche aufweist. Insbesondere ist es zweckmässig, dass das Kabelklemmenteil und das Schienenteil an den Flanschen um die Schwenkachse schwenkbar miteinander verbunden sind. Hierdurch kann der konstruktive Aufwand noch weiter reduziert werden. Die Verbindung an den Flanschen kann insbesondere durch einen oder mehrere Schwenkbolzen realisiert werden.

Insbesondere können die Kabelklemmenbolzen an der Grundplatte des Kabelklemmenteils angeordnet sein und diese Grundplatte durchlaufen und/oder der zumindest eine Schienenbolzen an der Grundplatte des Schienenteils angeordnet sein und diese Grundplatte durchlaufen.

Wie schon weiter oben angedeutet kann es besonders zweckmässig sein, dass die Vorrichtung einen zweiten Schienenbolzen aufweist, mittels dem das Zwischenstück an seinem Schienenteil an der Montageschiene festlegbar ist. Das Festlegen mittels zweier Schienenbolzen kann die Zuverlässigkeit noch weiter erhöhen und insbesondere einer unerwünschten Verschiebung oder Verdrehung des Zwischenstücks relativ zur Montageschiene in besonders einfacher Weise entgegenwirken.

Insbesondere kann vorgesehen werden, dass das Schienenteil, insbesondere in seiner Grundplatte, ein erstes Langloch und ein zweites Langloch aufweist, wobei der erste Schienenbolzen im ersten Langloch und der zweite Schienenbolzen im zweiten Langloch angeordnet ist. Hierdurch kann in konstruktiv besonders einfacher Weise eine zusätzliche Justiermöglichkeit geschaffen werden. Die Langlöcher erstrecken sich vorzugsweise senkrecht zu den darin angeordneten Bolzen. Besonders zweckmässig ist es, dass das erste Langloch des Schienenteils ein gerades, vorzugsweise parallel zur Schwenkachse verlaufendes, Langloch und das zweite Langloch des Schienenteils ein gekrümmtes Langloch ist. Durch das gekrümmte Langloch kann eine besonders einfache und vielseitige Drehjustierung, insbesondere senkrecht zur oben genannten Schwenkachse, realisiert werden.

Weiterhin ist es bevorzugt, dass das Schienenteil, insbesondere in seiner Grundplatte, ein drittes Langloch und ein viertes Langloch, insbesondere für die Schienenbolzen, aufweist. Diese Langlöcher können zur alternativen Anordnung der Schienenbolzen dienen, so dass die Einsatzvielfalt noch weiter gesteigert werden kann und insbesondere ein Schwenken in zwei Winkelrichtungen möglich wird. Besonders bevorzugt ist es, dass das dritte Langloch und das vierte Langloch des Schienenteils spiegelsymmetrisch zum ersten Langloch beziehungsweise zum zweiten Langloch des Schienenteils ausgebildet sind. Dies kann im Hinblick auf die Fertigung und die Montage vorteilhaft sein.

Eine weiteres Merkmal der Erfindung liegt darin, dass das Kabelklemmenteil, insbesondere in seiner Grundplatte, ein erstes Langloch und ein zweites Langloch aufweist, wobei der erste Kabelklemmenbolzen im ersten Langloch und der zweite Kabelklemmenbolzen im zweiten Langloch angeordnet ist. Hierdurch kann in konstruktiv besonders einfacher Weise noch eine weitere Justiermöglichkeit geschaffen werden. Die Langlöcher erstrecken sich vorzugsweise senkrecht zu den darin angeordneten Bolzen. Es ist vorgesehen, dass das erste Langloch des Kabelklemmenteils ein gerades, vorzugsweise parallel zur Schwenkachse verlaufendes Langloch und das zweite Langloch des Kabelklemmenteils ein gekrümmtes Langloch ist. Durch das gekrümmte Langloch kann eine besonders einfache Drehjustierung, insbesondere senkrecht zur oben genannten Schwenkachse, realisiert werden. Insbesondere kann die Kombination des geraden mit dem gekrümmten, das heisst dem bogenförmigen Langloch am Kabelklemmenteil die schwenkbare Verwendung von verschieden grossen Kabelklemmen mit unterschiedlichen Befestigungsabständen ermöglichen.

Weiterhin ist es bevorzugt, dass das Kabelklemmenteil, insbesondere in seiner Grundplatte, ein drittes Langloch und ein viertes Langloch, insbesondere für die Kabelklemmenbolzen, aufweist. Diese Langlöcher können zur alternativen Anordnung der Kabelklemmenbolzen dienen, so dass die Einsatzvielfalt noch weiter gesteigert werden kann und insbesondere ein Schwenken in zwei Winkelrichtungen möglich wird.

Besonders bevorzugt ist es, dass das dritte Langloch und das vierte Langloch des Kabelklemmenteils spiegelsymmetrisch zum ersten Langloch beziehungsweise zum zweiten Langloch des Kabelklemmenteils ausgebildet sind. Dies kann im Hinblick auf die Fertigung und die Montage vorteilhaft sein.

Vorzugsweise weisen das Kabelklemmenteil und das Schienenteil dasselbe Lochmuster auf. Besonders zweckmässig ist es, dass das Kabelklemmenteil und das Schienenteil baugleich sind, was die Lagerhaltungskosten und/oder den Fertigungsaufwand weiter reduzieren kann.

Die erfindungsgemässe Vorrichtung kann eine horizontale und vertikale Verstellung ermöglichen, wobei diese Funktionalität insbesondere in einem Bauteil, nämlich dem Zwischenstück, integriert ist. Dabei können vergleichsweise grosse Schwenkwinkel horizontal und insbesondere vertikal gegeben sein, wobei die Vorrichtung kompakt, stabil und einfach zu fertigen sein kann. Insbesondere können das Kabelklemmenteil und/oder das Schienenteil Stanzbiegeteile sein. Ein grosser Schwenkwinkel um die vertikale Achse kann insbesondere durch Addition einer Schwenkung der Kabelklemme relativ zum Zwischenstück und einer Schwenkung des Zwischenstücks relativ zur Montageschiene gegeben sein. Aufgrund der Ausgestaltung der erfindungsgemässen Vorrichtung kann überdies die translatorische Verschiebung beim Schwenken um die horizontale Schwenkachse vergleichsweise klein sein.

Mit der erfindungsgemässe Vorrichtung kann in besonders einfacher Weise eine geringe Bauhöhe realisiert werden, was im Hinblick auf eine Verwendung für in mehreren Ebenen verlegte Kabel vorteilhaft sein kann. Eine Vorrichtung pro Kabel kann dabei eine individuelle Einstellung für jedes einzelne Kabel ermöglichen. Die Langlöcher im Kabelklemmenteil ermöglichen es, dass das Zwischenstück für mehrere Grössen von Kabelklemmen verwendet werden kann.

Die Erfindung wird nachfolgend anhand bevorzugter Ausführungsbeispiele näher erläutert, die schematisch in den beiliegenden Figuren dargestellt sind, wobei einzelne Merkmale der nachfolgend gezeigten Ausführungsbeispiele im Rahmen der Erfindung grundsätzlich einzeln oder in beliebiger Kombination realisiert werden können. In den Figuren zeigen schematisch:
- Figur 1:: eine perspektivische Darstellung einer Ausführungsform einer erfindungsgemässen Vorrichtung zum Befestigen eines Kabels an einer Montageschiene;
- Figur 2:: die Vorrichtung aus Figur 1, der besseren Sichtbarkeit halber ohne Kabelklemme und Kabelklemmenbolzen;
- Figur 3:: das Schienenteil der Vorrichtung aus Figur 1 in Draufsicht; und
- Figur 4:: das Schienenteil der Vorrichtung aus Figur 1 in einer alternativen Montagekonfiguration an der Montageschiene in einer Ansicht entsprechend Figur 3.

Die Figuren zeigen eine Ausführungsform einer erfindungsgemässen Vorrichtung zum Befestigen eines Kabels an einer Montageschiene. Die Vorrichtung weist eine Kabelklemme 2 sowie ein Zwischenstück 1 auf, über welches die Kabelklemme 2 mit einer Montageschiene 4 verbunden ist. Die Kabelklemme 2 ist dafür eingerichtet, das Kabel zu umgreifen und hierbei zu fixieren. Die Kabelklemme 2 kann in fachüblicher Weise beispielsweise mit zwei Kabelklemmenbügeln ausgestattet sein, zwischen denen das Kabel zu liegen kommt.

Das Zwischenstück 1 ist mehrteilig ausgebildet und weist ein Kabelklemmenteil 20 und ein Schienenteil 40 auf, wobei das Kabelklemmenteil 20 um eine Schwenkachse 99 drehgelenkartig schwenkbar am Schienenteil 40 angelenkt ist. Das Kabelklemmenteil 20 weist eine ebene Grundplatte 23 sowie zwei Flansche 21 und 22 auf, die an gegenüberliegenden Enden des Kabelklemmenteils 20 rechtwinklig von der Grundplatte 23 des Kabelklemmenteils 20 zum Schienenteil 40 hin vorstehen. Analog weist das Schienenteil 40 eine ebene Grundplatte 43 sowie zwei Flansche 41 und 42 auf, die an gegenüberliegenden Enden des Schienenteils 40 rechtwinklig von der Grundplatte 43 des Schienenteils 40 zum Kabelklemmenteil 20 hin vorstehen. Die Flansche 21 und 41 sind mittels eines ersten Schwenkbolzens 61, der die Flansche 21 und 41 durchläuft, um die Schwenkachse 99 schwenkbar miteinander verbunden. Die Flansche 22 und 42 sind mittels eines zweiten Schwenkbolzens 62, der die Flansche 22 und 42 durchläuft, um die Schwenkachse 99 schwenkbar miteinander verbunden. Die Flansche 21 und 41 bilden somit die Gelenkbuchsen und der erste Schwenkbolzen 61 die Achse eines ersten Drehgelenks um die Schwenkachse 99. Die Flansche 22 und 42 bilden die Gelenkbuchsen und der zweite Schwenkbolzen 62 die Achse eines zweiten Drehgelenks um die Schwenkachse 99.

Die Kabelklemme 2 ist mittels zweier Kabelklemmenbolzen 11 und 12 am Kabelklemmenteil 20 des Zwischenstücks 1 festgelegt, welche, vorzugsweise rechtwinklig zur Achse des aufzunehmenden Kabels, von der Kabelklemme 2 ausgehen und das Kabelklemmenteil 20, vorzugsweise rechtwinklig zur Grundplatte 23 des Kabelklemmenteils 20, durchdringen. Vorzugsweise sind die Kabelklemmenbolzen 11 und 12 als Schraubbolzen ausgebildet. Im Kabelklemmenteil 20 sind insgesamt vier Langlöcher 31, 32, 33 und 34 zur Aufnahme der Kabelklemmenbolzen 11 und 12 vorgesehen. Die Langlöcher 31 und 33 sind dabei als gerade Langlöcher ausgebildet und die Langlöcher 32 und 34 als gekrümmte Langlöcher. Im dargestellten Ausführungsbeispiel sind die Kabelklemmenbolzen 11 und 12 in den Langlöchern 31 beziehungsweise 32 aufgenommen.

Die beiden geraden Langlöcher 31 und 33 verlaufen parallel zur Schwenkachse 99 und sie fluchten beide miteinander, das heisst sie erstrecken sich in ihrer langen Ausdehnung entlang einer gemeinsamen Linie. Die beiden gekrümmten Langlöcher 32 und 34 sind in dieselbe Richtung gekrümmt, nämlich zur Mitte der Grundplatte 23 des Kabelklemmenteils 20 hin. Die beiden gekrümmten Langlöcher 32 und 34 sind vorzugsweise weiter von der Schwenkachse 99 entfernt als die beiden geraden Langlöcher 31 und 33.

Die Langlöcher 31 und 34 des Kabelklemmenteils 20 sind spiegelsymmetrisch, insbesondere mit einer senkrecht zur Schwenkachse 99 verlaufenden Spiegelebene, zu den anderen Langlöchern 33 beziehungsweise 32 des Kabelklemmenteils 20 angeordnet. Wie dargestellt ist es besonders bevorzugt, dass das gesamte Kabelklemmenteil 20 spiegelsymmetrisch zu dieser Spiegelebene ausgeführt ist.

Das Schienenteil 40 ist mittels zweier Schienenbolzen 15 und 16 an der Montageschiene 4 festgelegt, welche das Schienenteil 40, insbesondere rechtwinklig zur Grundplatte 43 des Schienenteils 40, durchdringen. Im dargestellten Ausführungsbeispiel weisen die Schienenbolzen 15 und 16 Nutensteine auf, welche beide einen Schlitz der Montageschiene 4 hintergreifen und hierdurch an der Montageschiene 4 halten. Es sind aber auch andere Ausgestaltungen denkbar, beispielsweise Verschraubungen der Schienenbolzen 15 und 16 in Löchern der Montageschiene 4. Die Nutensteine können mit den Schienenbolzen 15 und 16 verschraubte Bauteile sein oder mit den Schienenbolzen 15 und 16 fest verbunden sein, wobei die Schienenbolzen 15 und 16 dann T-Bolzen sein können.

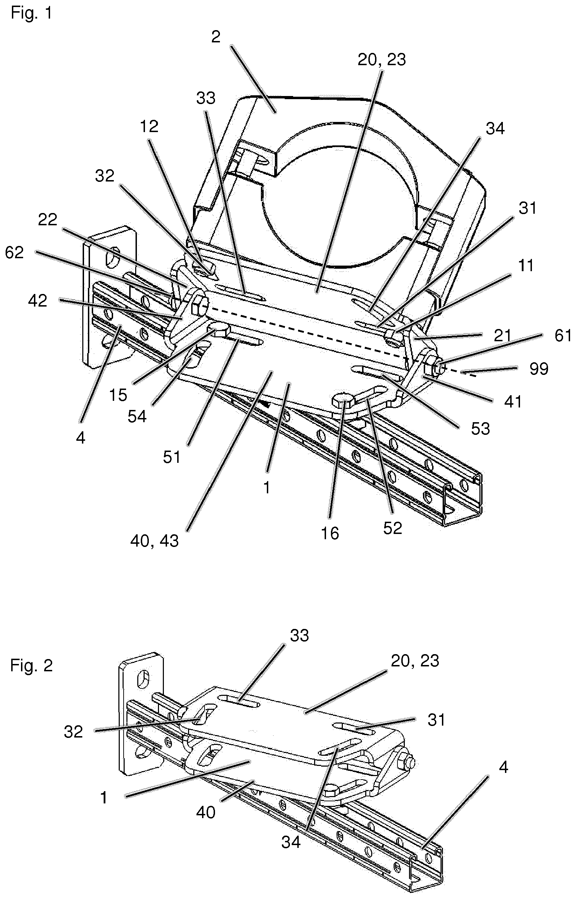

Im Schienenteil 40 sind insgesamt vier Langlöcher 51, 52, 53 und 54 zur Aufnahme der Schienenbolzen 15 und 16 vorgesehen. Die Langlöcher 51 und 53 sind dabei als gerade Langlöcher ausgebildet und die Langlöcher 52 und 54 als gekrümmte Langlöcher. In dem in den Figuren 1 bis 3 dargestellten Ausführungsbeispiel sind die Schienenbolzen 15 und 16 in den Langlöchern 51 beziehungsweise 52 angeordnet.

Die beiden geraden Langlöcher 51 und 53 verlaufen parallel zur Schwenkachse 99 und sie fluchten beiden miteinander, das heisst sie erstrecken sich in ihrer langen Ausdehnung entlang einer gemeinsamen Linie. Die beiden gekrümmten Langlöcher 52 und 54 sind in dieselbe Richtung gekrümmt, nämlich zur Mitte der Grundplatte 43 des Schienenteils 40 hin. Die beiden gekrümmten Langlöcher 52 und 54 sind vorzugsweise weiter von der Schwenkachse 99 entfernt als die beiden geraden Langlöcher 51 und 53.

Die Langlöcher 51 und 54 des Schienenteils 40 sind spiegelsymmetrisch, insbesondere mit einer senkrecht zur Schwenkachse 99 verlaufenden Spiegelebene, zu den anderen Langlöchern 53 beziehungsweise 52 des Schienenteils 40 angeordnet. Wie dargestellt ist es besonders bevorzugt, dass das gesamte Schienenteil 40 spiegelsymmetrisch zu dieser Spiegelebene ausgeführt ist.

Wie dargestellt sind das Schienenteil 40 und das Kabelklemmenteil 20 vorzugsweise baugleich ausgeführt.

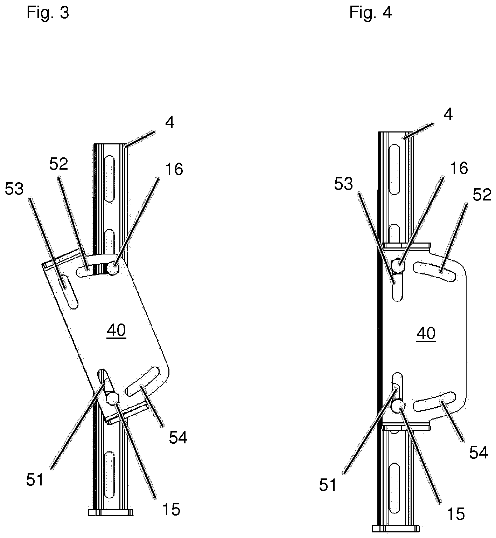

Die beiden Schienenbolzen 15 und 16 können wie in Figur 4 gezeigt in jeweils einem der beiden geraden Langlöcher 51 beziehungsweise 53 des Schienenteils 40 angeordnet werden. Alternativ kann der erste der beiden Schienenbolzen 15 wie in den Figuren 1 bis 3 gezeigt in einem der geraden Langlöcher 51 oder 53 und der zweite der beiden Schienenbolzen 16 in dem jeweils gegenüberliegenden gekrümmten Langloch 52 beziehungsweise 54 angeordnet werden. Dies ermöglicht ein Schwenken des Zwischenstücks 1 relativ zur Montageschiene 4 um eine senkrecht zur Schwenkachse 99 und insbesondere vertikal verlaufende zweite Schwenkachse.

Die beiden Kabelklemmenbolzen 11 und 12 können in jeweils einem der beiden geraden Langlöcher 31 beziehungsweise 33 des Kabelklemmenteils 20 angeordnet werden. Alternativ kann der erste Kabelklemmenbolzen 11 wie in Figur 1 gezeigt in einem der geraden Langlöcher 31 oder 33 und der zweite Kabelklemmenbolzen 12 in dem jeweils gegenüberliegenden gekrümmten Langloch 32 beziehungsweise 34 angeordnet werden. Dies ermöglicht ein Schwenken der Kabelklemme 2 relativ zum Zwischenstück 1 um eine senkrecht zur Schwenkachse 99 verlaufende weitere Schwenkachse.

Abweichend von der vorstehend dargestellten Ausführung können das Schienenteil und/oder das Kabelklemmenteil, insbesondere deren Grundplatten, auch die Grundform eines Dreiecks haben, was eine besonders materialsparende Fertigung durch Schachtelung der Dreiecke erlauben kann.

## Patentansprüche

1. Vorrichtung zum Befestigen eines Kabels an einer Montageschiene (4) mit
- einer Kabelklemme (2) für das Kabel,
- einem Zwischenstück (1),
- einem ersten Kabelklemmenbolzen (11) und einem zweiten Kabelklemmenbolzen (12), mit denen die Kabelklemme (2) am Zwischenstück (1) festgelegt ist, und
- einem ersten Schienenbolzen (15), mit dem das Zwischenstück (1) an der Montageschiene (4) festlegbar ist,
**dadurch gekennzeichnet,**
**dass** das Zwischenstück (1) ein Schienenteil (40) und ein Kabelklemmenteil (20) aufweist, welches um eine Schwenkachse (99) schwenkbar am Schienenteil (40) gelagert ist,
**dass** die Kabelklemme (2) mittels des ersten Kabelklemmenbolzens (11) und des zweiten Kabelklemmenbolzens (12) am Kabelklemmenteil (20) des Zwischenstücks (1) festgelegt ist,
**dass**, mittels des ersten Schienenbolzens (15), das Zwischenstück (1) an seinem Schienenteil (40) an der Montageschiene (4) festlegbar ist, dass das Kabelklemmenteil (20) ein erstes Langloch (31) und ein zweites Langloch (32) aufweist, wobei der erste Kabelklemmenbolzen (11) im ersten Langloch (31) und der zweite Kabelklemmenbolzen (12) im zweiten Langloch (32) angeordnet ist, und dass das erste Langloch (31) des Kabelklemmenteils (20) ein gerades Langloch und das zweite Langloch (32) des Kabelklemmenteils (20) ein gekrümmtes Langloch ist.

2. Vorrichtung nach Anspruch 1,
**dadurch gekennzeichnet,**
**dass** die Schwenkachse (99) rechtwinklig zu zumindest einem der Bolzen (11, 12, 15, 16) verläuft.

3. Vorrichtung nach einem der vorstehenden Ansprüche,
**dadurch gekennzeichnet,**
**dass** das Kabelklemmenteil (20) eine Grundplatte (23) und zwei abgewinkelte Flansche (21, 22) aufweist,
**dass** das Schienenteil (40) eine Grundplatte (43) und zwei abgewinkelte Flansche (41, 42) aufweist, und
**dass** das Kabelklemmenteil (20) und das Schienenteil (40) an den Flanschen (21, 22, 41, 42) um die Schwenkachse (99) schwenkbar miteinander verbunden sind.

4. Vorrichtung nach einem der vorstehenden Ansprüche,
**dadurch gekennzeichnet,**
**dass** sie einen zweiten Schienenbolzen (16) aufweist, mittels dem das Zwischenstück (1) an seinem Schienenteil (40) an der Montageschiene (4) festlegbar ist.

5. Vorrichtung nach Anspruch 4,
**dadurch gekennzeichnet,**
**dass** das Schienenteil (40) ein erstes Langloch (51) und ein zweites Langloch (52) aufweist, wobei der erste Schienenbolzen (15) im ersten Langloch (51) und der zweite Schienenbolzen (16) im zweiten Langloch (52) angeordnet ist.

6. Vorrichtung nach Anspruch 5,
**dadurch gekennzeichnet,**
**dass** das erste Langloch (51) des Schienenteils (40) ein gerades, parallel zur Schwenkachse (99) verlaufendes Langloch und das zweite Langloch (52) des Schienenteils (40) ein gekrümmtes Langloch ist.

7. Vorrichtung nach Anspruch 6,
**dadurch gekennzeichnet,**
**dass** das Schienenteil (40) ein drittes Langloch (53) und ein viertes Langloch (54) aufweist, wobei das dritte Langloch (53) und das vierte Langloch (54) des Schienenteils (40) spiegelsymmetrisch zum ersten Langloch (51) beziehungsweise zum zweiten Langloch (52) des Schienenteils (40) ausgebildet sind.

8. Vorrichtung nach einem der vorstehenden Ansprüche,
**dadurch gekennzeichnet,**
**dass** das erste Langloch (31) des Kabelklemmenteils (20) parallel zur Schwenkachse (99) verläuft.

9. Vorrichtung nach einem der vorstehenden Ansprüche,
**dadurch gekennzeichnet,**
**dass** das Kabelklemmenteil (20) ein drittes Langloch (33) und ein viertes Langloch (34) aufweist, wobei das dritte Langloch (33) und das vierte Langloch (34) des Kabelklemmenteils (20) spiegelsymmetrisch zum ersten Langloch (31) beziehungsweise zum zweiten Langloch (32) des Kabelklemmenteils (20) ausgebildet sind.

10. Vorrichtung nach einem der vorstehenden Ansprüche,
**dadurch gekennzeichnet,**
**dass** das Kabelklemmenteil (20) und das Schienenteil (40) baugleich sind.

## Claims

1. Device for securing a cable to an installation rail (4) with
- a cable clamp (2) for the cable,
- an intermediate piece (1),
- a first cable clamping bolt (11) and a second cable clamping bolt (12), with which the cable clamp (2) is secured to the intermediate piece (1), and
- a first rail bolt (15), with which the intermediate piece (1) can be secured to the installation rail (4),
**characterized in that**
the intermediate piece (1) comprises a rail part (40) and a cable clamp art (20),
which is mounted at the rail part such as to pivot about a pivot axis (99),
that the cable clamp (2) is secured by means of the first cable clamp bolt (11) and the second cable clamp bolt (12) to the cable clamp part (20) of the intermediate piece (1),
that, by means of the first rail bolt (15), the intermediate piece (1) can be secured by its first rail part (40) to the installation rail (4),
that the cable clamp part (20) comprises a first longitudinal hole (31) and a second longitudinal hole (32), wherein the first cable clamp bolt (11) is arranged in the first longitudinal hole (31) and the second cable bolt (12) is arranged in the second longitudinal hole (32), and that the first longitudinal hole (31) of the cable clamp part (20) is a straight longitudinal hole and the second longitudinal hole (32) of the cable clamp part (20) is a cambered longitudinal hole.

2. Device according to claim 1,
**characterized in that**
the pivot axis (99) runs at right angles to at least one of the bolts (11, 12, 15, 16).

3. Device according to any one of the preceding claims,
**characterized in that**
the cable clamp part (20) comprises a base plate (23) and two angled flanges (21, 22), that the rail part (40) comprises a base plate (43) and two angled flanges (41, 42), and that the cable clamp part (20) and the rail part (40) are connected to one another at the flanges (21, 22, 41, 42) such as to be able to pivot about the pivot axis (99).

4. Device according to any one of the preceding claims,
**characterized in that**
it comprises a second rail bolt (16), by means of which the intermediate piece (1) can be secured by its rail part (40) to the installation rail (4).

5. Device according to claim 4,
**characterized in that**
the rail part (40) comprises a first longitudinal hole (51) and a second longitudinal hole (52), wherein the first rail bolt (15) is arranged in the first longitudinal hole (51) and the second rail bolt (16) is arranged in the second longitudinal hole (52).

6. Device according to claim 5,
**characterized in that**
the first longitudinal hole (51) of the rail part (40) is a straight longitudinal hole running parallel to the pivot axis (99), and the second longitudinal hole (52) of the rail part (40) is a cambered longitudinal hole.

7. Device according to claim 6,
**characterized in that**
the rail part (40) comprises a third longitudinal hole (53) and a fourth longitudinal hole (54), wherein the third longitudinal hole (53) and the fourth longitudinal hole (54) of the rail part (40) are configured as mirror-symmetrical to the first longitudinal hole (51) and to the second longitudinal hole (52) respectively of the rail part.

8. Device according to any one of the preceding claims,
**characterized in that**
the first longitudinal hole (31) of the cable clamp part (20) runs parallel to the pivot axis (99).

9. Device according to any one of the preceding claims,
**characterized in that**
the cable clamp part (20) comprises a third longitudinal hole (33) and a fourth longitudinal hole (34), wherein the third longitudinal hole (33) and the fourth longitudinal hole (34) of the cable clamp part (20) are configured as mirror-symmetrical to the first longitudinal hole (31) and to the second longitudinal hole (32) respectively of the cable clamp part (20).

10. Device according to any one of the preceding claims,
**characterized in that**
the cable clamp part (20) and the rail part (40) are of the same structural design.

## Revendications

1. Dispositif destiné à fixer un câble sur un rail de montage (4), comportant :
- un serre-câble (2) pour le câble,
- une pièce intermédiaire (1),
- un premier boulon de serrage de câble (11) et un second boulon de serrage de câble (12), au moyen desquels le serre-câble (2) est fixé sur la pièce intermédiaire (1), et
- un premier boulon de rail (15) au moyen duquel la pièce intermédiaire (1) peut être fixée sur le rail de montage (14),
**caractérisé en ce que**
la pièce intermédiaire (1) comporte une partie de rail (40) et une partie de serrage de câble (20) qui est montée sur la partie de rail (40) de manière à pouvoir pivoter autour d'un axe de pivotement (99),
le serre-câble (2) est fixé sur la partie de serrage de câble (20) de la pièce intermédiaire (1) au moyen du premier boulon de serrage de câble (11) et du second boulon de serrage de câble (12),
la pièce intermédiaire (1) peut être fixée, au niveau de sa partie de rail (40), sur le rail de montage (4) au moyen du premier boulon de rail (15),
la partie de serrage de câble (20) comporte un premier trou oblong (31) et un deuxième trou oblong (32), le premier boulon de serrage de câble (11) étant agencé dans le premier trou oblong (31) et le second boulon de serrage de câble (12) étant agencé dans le deuxième trou oblong (32), et
le premier trou oblong (31) de la partie de serrage de câble (20) est un trou oblong rectiligne et le deuxième trou oblong (32) de la partie de serrage de câble (20) est un trou oblong incurvé.

2. Dispositif selon la revendication 1,
**caractérisé en ce que**
l'axe de pivotement (99) s'étend orthogonalement à au moins un des boulons (11, 12, 15, 16).

3. Dispositif selon l'une des revendications précédentes,
**caractérisé en ce que**
la partie de serrage de câble (20) comporte une platine (23) et deux flancs repliés (21, 22),
la partie de rail (40) comporte une platine (43) et deux flancs repliés (41, 42), et
la partie de serrage de câble (20) et la partie de rail (40) sont reliées l'une à l'autre au niveau des flancs (21, 22, 41, 42) de manière à pouvoir pivoter autour de l'axe de pivotement (99).

4. Dispositif selon l'une des revendications précédentes,
**caractérisé en ce que**
il comporte un second boulon de rail (16), au moyen duquel la pièce intermédiaire (1) peut être fixée sur le rail de montage (4) au niveau de sa partie de rail (40) .

5. Dispositif selon la revendication 4,
**caractérisé en ce que**
la partie de rail (40) comporte un premier trou oblong (51) et un deuxième trou oblong (52), dans lequel le premier boulon de rail (15) est agencé dans le premier trou oblong (51) et le second boulon de rail (16) est agencé dans le deuxième trou oblong (52).

6. Dispositif selon la revendication 5,
**caractérisé en ce que**
le premier trou oblong (51) de la partie de rail (40) est un trou oblong rectiligne s'étendant parallèlement à l'axe de pivotement (99), et le deuxième trou oblong (52) de la partie de rail (40) est un trou oblong incurvé.

7. Dispositif selon la revendication 6,
**caractérisé en ce que**
la partie de rail (40) comporte un troisième trou oblong (53) et un quatrième trou oblong (54), dans lequel le troisième trou oblong (53) et le quatrième trou oblong (54) de la partie de rail (40) sont formés par symétrie miroir respectivement du premier trou oblong (51) et du deuxième trou oblong (52) de la partie de rail (40) .

8. Dispositif selon l'une des revendications précédentes,
**caractérisé en ce que**
le premier trou oblong (31) de la partie de serrage de câble (20) s'étend parallèlement à l'axe de pivotement (99).

9. Dispositif selon l'une des revendications précédentes,
**caractérisé en ce que**
la partie de serrage de câble (20) comporte un troisième trou oblong (33) et un quatrième trou oblong (34), dans lequel le troisième trou oblong (33) et le quatrième trou oblong (34) de la partie de serrage de câble (20) sont formés par symétrie miroir respectivement du premier trou oblong (31) et du deuxième trou oblong (32) de la partie de serrage de câble (20).

10. Dispositif selon l'une des revendications précédentes, **caractérisé en ce que** la partie de serrage de câble (20) et la partie de rail (40) ont une construction identique.
